# FASCICULE DE BREVET EUROPEEN

(11) **EP 1 040 447 B1**
(45) Date de publication et mention de la délivrance du brevet: **16.01.2002**
(21) Numéro de dépôt: 98955439.9
(22) Date de dépôt: 12.10.1998
(51) Int. Cl.: G06K 19/07

(54) **TRANSPONDEUR ACTIF COMMUTABLE EN TRANSPONDEUR PASSIF**
AKTIVER TRANSPONDER, DER ZU PASSIVEM TRANSPONDER SCHALTBAR IST
ACTIVE TRANSPONDER SWITCHABLE INTO PASSIVE TRANSPONDER

(30) Priorité: 23.12.1997 CH 295597; 23.12.1997 EP 97122712
(43) Date de publication de la demande: 04.10.2000
(73) Titulaire: EM Microelectronic-Marin SA, 2074 Marin (CH)
(72) Inventeur: ROZ, Thierry, CH-2515 Prêles (CH)
(74) Mandataire: Barbeaux, Bernard
(86) Numéro de dépôt international: EP9806470
(87) Numéro de publication internationale: WO9934325

(56) Documents cités:
- EP-A- 0 299 557
- WO-A-92/08148
- WO-A-97/43740
- GB-A- 2 216 303
- GB-A- 2 292 866

## Description

La présente invention concerne le domaine des transpondeurs actifs et, plus précisément, des transpondeurs actifs commutables en transpondeurs passifs.

Il existe classiquement un grand nombre de dispositifs portatifs pour réaliser l'identification à distance d'un objet inconnu. Typiquement, des données sont transférées, sous forme de signaux radioélectriques, entre une scation de base fixe servant d'émetteur-récepteur, et un dispositif portatif que l'on réalise usuellement en utilisant un transpondeur.

On doit distinguer classiquement deux types de transpondeurs.

On qualifie de "passif" un transpondeur qui convertit un signal radioélectrique provenant d'une station de base, en une tension électrique qui fournit ensuite la puissance électrique nécessaire au fonctionnement du transpondeur. A cet effet, un transpondeur passif comprend une antenne agencée pour pouvoir recevoir et émettre des signaux radioélectriques contenant des données, un condensateur de stockage connecté à l'antenne, pour pouvoir stocker de l'énergie électrique reçue par l'antenne, et un circuit intégré connecté à l'antenne et au condensateur de stockage, pour pouvoir traiter les données reçues par l'antenne, et fournir à cette dernière d'autres données à émettre sous forme de signal radioélectrique. On note que le condensateur de stockage réalise, dans un tel transpondeur, la fourniture de l'alimentation électrique du circuit intégré.

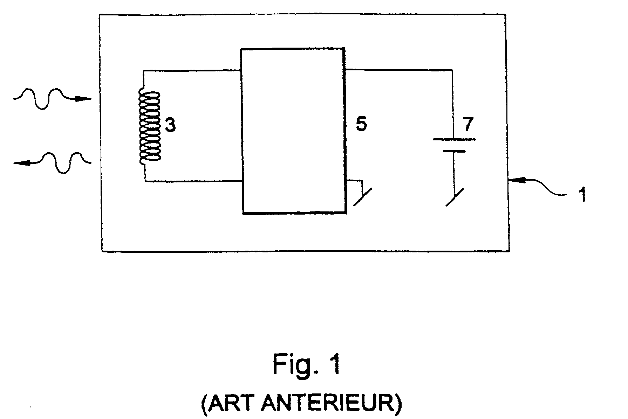

On qualifie de "actif" le transpondeur tel que décrit ci-dessous. La figure 1 représente un tel transpondeur désigné par la référence 1. Ce transpondeur comprend une antenne 3 agencée pour pouvoir recevoir et émettre des signaux radioélectriques contenant des données, un circuit intégré 5 connecté à l'antenne 3, pour pouvoir traiter des données reçues par l'antenne 3, et fournir à cette dernière d'autres données à émettre sous forme de signal radioélectrique. Le transpondeur actif 1 comprend en outre une source de puissance électrique interne, qui est communément réalisée par une batterie au lithium, désignée dans la figure 1 par la référence 7. On note que la batterie 7 réalise, dans un tel transpondeur, la fourniture de l'alimentation électrique des différents composants.

Des transpondeurs actifs sont utilisés pour transmettre des données sur de grandes distances. Par exemple, on utilise communément dans une clé pour réaliser la commande à distance de l'ouverture d'une porte de véhicule, sans qu'il y ait un contact matériel entre la porte et la clé, ni même une action de l'utilisateur sur cette clé.

Il existe également des transpondeurs actifs de type susmentionné qui comprennent un condensateur agencé pour pouvoir stocker l'énergie électrique reçue par l'antenne.

Le document GB 2.292.866 décrit un tel transpondeur actif qui comprend en outre un moyen de commutation agencé de sorte que, lorsque la tension fournie par le condensateur de stockage est inférieure à la tension fournie par le moyen d'alimentation, ce dernier alimente les différents composants du transpondeur et, lorsque la tension fournie par le condensateur de stockage est supérieure à la tension fournie par le moyen d'alimentation, le condensateur de stockage alimente les composants.

Un inconvénient de tels transpondeurs actifs réside dans le fait qu'il fonctionne normalement, tant que la batterie fournit une tension électrique suffisante pour alimenter l'ensemble des composants du transpondeur. Ainsi, dans l'exemple déjà cité où un transpondeur actif est incorporé dans une clé, supposons que la batterie ne fournit plus un niveau de tension suffisant pour assurer le bon fonctionnement du transpondeur. Dans ce cas, le transpondeur ne permet plus de fournir la commande de l'ouverture de la porte, ce qui est généralement gênant pour l'utilisateur du véhicule.

Un objet de la présente invention est de prévoir un transpondeur actif palliant les inconvénients des transpondeurs actifs classiques, notamment relativement à son fonctionnement quand la batterie fournit une tension électrique insuffisante pour alimenter l'ensemble des composants du transpondeur.

Un autre objet de la présente invention est de prévoir un transpondeur actif répondant aux critères traditionnels dans l'industrie des semi-conducteurs, de complexité et de coût.

Ces objets, ainsi que d'autres, sont atteints par le transpondeur actif selon la revendication 1.

Un avantage du moyen de commutation du transpondeur selon la présente invention, est de permettre à ce transpondeur de déterminer si la valeur de tension fournie par le moyen d'alimentation, est suffisante pour assurer l'alimentation électrique des différents composants du transpondeur, notamment pour réaliser les fonctions élémentaires désirées.

Un autre avantage du moyen de commutation du transpondeur selon la présente invention, réside dans le fait que son agencement permet d'empêcher la mise en conduction d'un transistor parasite de type bipolaire vertical, quand les transistors à effet de champ de ce moyen sont bloqués.

Un autre avantage du moyen de commutation du transpondeur selon la présente invention, réside dans le fait que son agencement fournit une faible chute de tension entre ses bornes d'entrée et sa borne de sortie, ce qui permet de réaliser l'alimentation électrique du moyen de traitement à une tension qui est sensiblement égale à celle fournie par le moyen d'alimentation.

Un avantage du transpondeur selon la présente invention, réside dans le fait qu'il est constitué de composants usuellement réalisés dans l'industrie des semi-conducteurs, notamment par des étapes de fabrication d'une filière de type CMOS connue en soi.

Ces objets, caractéristiques et avantages, ainsi que d'autres, de la présente invention apparaîtront plus clairement à la lecture de la description détaillée d'un mode de réalisation préféré de l'invention, donné à titre d'exemple uniquement, en relation avec les figures jointes, parmi lesquelles :
- la figure 1 déjà citée représente un transpondeur actif classique;
- la figure 2 représente un transpondeur actif selon la présente invention;
- la figure 3 représente un mode de réalisation préféré du moyen de commutation du transpondeur de la figure 2; et
- la figure 4 représente les chronogrammes de cinq tensions présentes dans le transpondeur de la figure 2.

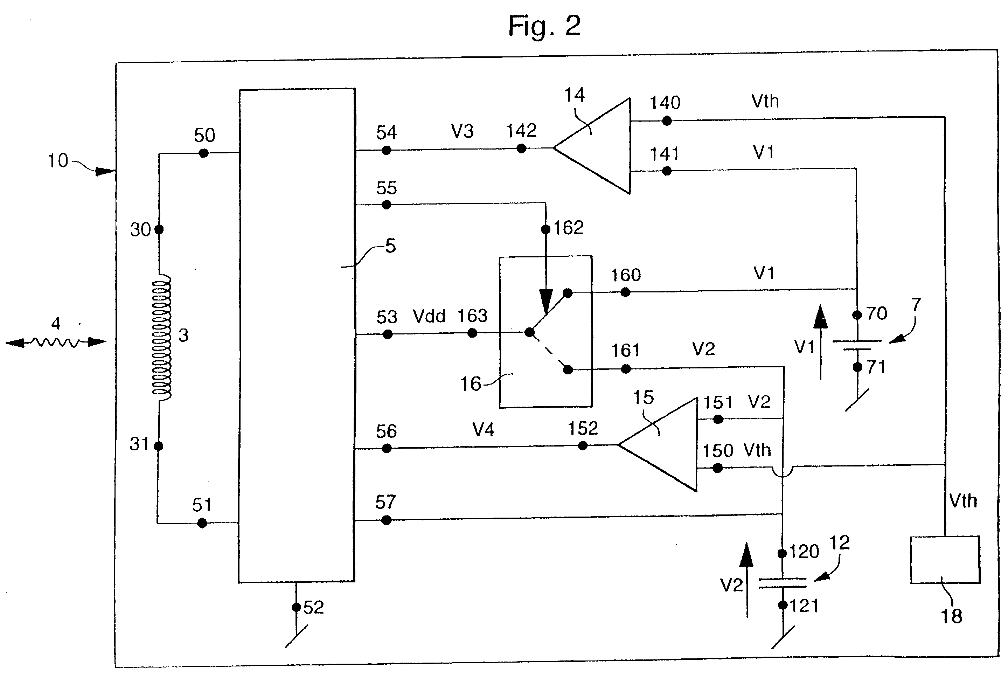

La figure 2 représente un transpondeur actif 10 selon la présente invention.

On note que le transpondeur représenté en figure 2 est proche du transpondeur 1 représenté en figure 1. Ainsi, par souci de simplicité, les composants représentés en figure 2 et désignés par les mêmes références que ceux représentés en figure 1, sont sensiblement identiques à ceux désignés en figure 1.

Comme le représente la figure 2, le transpondeur actif 10 comprend une antenne 3, un moyen de traitement 5, et un moyen d'alimentation 7.

L'antenne 3 est agencée pour pouvoir recevoir et émettre des données de et vers un dispositif externe (par exemple une station de base classique), par l'intermédiaire d'un signal radioélectrique 4. L'antenne 3 comprend deux bornes de connexion 30 et 31 par lesquelles sont fournies, sous la forme d'un signal électrique, les données reçues ou les données à émettre.

On réalise de préférence l'antenne 3 en formant une bobine, comme cela est connu en soi.

Le moyen de traitement 5 est agencé pour pouvoir traiter les données reçues et fournir les données à émettre. A cet effet, le moyen de traitement 5 comprend deux bornes de connexion 50 et 51 connectées respectivement aux bornes 30 et 31 de l'antenne 3. En outre, le moyen de traitement 5 comprend une borne de masse 52 connectée à la masse du transpondeur 10, et une borne d'alimentation 53 destinée à recevoir la tension d'alimentation Vdd, comme cela sera décrit ci-après. Le moyen de traitement 5 comprend également quatre bornes de connexion supplémentaires désignées 54 à 57.

On réalise de préférence le moyen de traitement 5 en formant un bloc logique classique et une interface classique disposée entre ce bloc et l'antenne 3, une telle interface étant décrite par exemple dans le document GB 2.292.866 déjà cité. Pour l'essentiel, cette interface comprend un circuit pouvant fournir de l'énergie à partir du signal 4 reçu par l'antenne 3. A cet effet, un tel circuit comprend un pont de quatre diodes pour convertir la tension alternative du signal 4 en une tension continue.

Le moyen d'alimentation 7 est agencé pour pouvoir fournir une tension électrique V1 suffisante pour alimenter électriquement l'ensemble des composants du transpondeur 10. A cet effet, le moyen d'alimentation 7 comprend une borne de fourniture 70 pour fournir la tension V1, et une borne de masse 71 connectée à la masse du transpondeur 10.

On réalise de préférence le moyen d'alimentation 7 en utilisant une batterie au lithium classique ou un accumulateur classique.

Le transpondeur 10 comprend en outre un moyen de stockage 12, deux moyens de comparaison 14 et 15, et un moyen de commutation 16.

Le moyen de stockage 12 est agencé pour pouvoir stocker de l'énergie électrique, et fournir une tension électrique V2. A cet effet, le moyen de stockage 12 comprend une borne 120 connectée à la borne 57 du moyen de traitement 5 et, plus particulièrement, à ladite interface du moyen de traitement 5, de manière à recevoir l'énergie reçue par l'antenne 3, c'est-à-dire ladite tension continue issue du signal 4. Le moyen de stockage 12 comprend en outre une borne de masse 121 connectée à la masse du transpondeur 10.

On réalise de préférence le moyen de stockage 12 en formant un condensateur classique connecté entre les bornes 120 et 121, de sorte que la tension présente entre ces bornes constitue la tension continue V2.

Le moyen de comparaison 14 est agencé pour pouvoir comparer la tension électrique V1 à un seuil de tension prédéterminé Vth. A cet effet, le moyen de comparaison 14 comprend une première borne d'entrée 140 connectée à un moyen de mémorisation 18, pour recevoir le seuil Vth, et une seconde borne d'entrée 141 connectée à la borne 70 du moyen d'alimentation 7, pour recevoir la tension V1. Le moyen de comparaison 14 comprend également une borne de sortie 142 connectée à la borne 54 du moyen de traitement 5, pour fournir à ce moyen un signal électrique V3 contenant le résultat de la comparaison entre la tension V1 et le seuil Vth.

On note que la valeur du seuil Vth est choisie et mémorisée pour répondre à des critères prédéterminés de bon fonctionnement du transpondeur 10, c'est-à-dire pour déterminer si la valeur de tension fournie par la batterie est suffisante pour assurer l'alimentation électrique du transpondeur 10, nécessaire pour réaliser des fonctions désirées telle que la fourniture à distance d'un signal de commande de l'ouverture d'une porte de véhicule.

On réalise de préférence le moyen de comparaison 14 en utilisant un amplificateur opérationnel, comme cela est connu en soi.

A l'instar du moyen de comparaison 14, le moyen de comparaison 15 est agencé pour pouvoir comparer la tension électrique V2 au seuil de tension Vth. A cet effet, le moyen de comparaison 15 comprend une première borne d'entrée 150 connectée au moyen de mémorisation 18, pour recevoir le seuil Vth, et une seconde borne d'entrée 151 connectée à la borne 120 du moyen de stockage 12, pour recevoir la tension V2. Le moyen de comparaison 15 comprend également une borne de sortie 152 connectée à la borne 56 du moyen de traitement 5, pour fournir à ce moyen un signal électrique V4 contenant le résultat de la comparaison entre la tension V2 et le seuil Vth.

On réalise de préférence le moyen de comparaison 15 en utilisant un amplificateur opérationnel, comme cela est connu en soi.

Le moyen de commutation 16 est agencé pour pouvoir connecter le moyen de traitement 5 au moyen de stockage 12 ou au moyen d'alimentation 7, sous la commande du moyen de traitement 5, et en fonction des résultats des comparaisons des tensions V1 et V2 au seuil Vth. A cet effet, le moyen de commutation 16 comprend une première borne d'entrée 160 connectée à la borne 70 du moyen d'alimentation 7, pour recevoir la tension V1, une seconde borne d'entrée 161 connectée à la borne 120 du moyen de stockage 12, pour recevoir la tension V2, au moins une borne de commande 162 connectée à la borne 55 du moyen de traitement 5, pour recevoir de ce moyen un signal électrique de commande de commutation, et une borne de sortie 163 connectée à la borne 53, pour fournir au moyen de traitement 5 la tension Vdd nécessaire à son alimentation électrique.

On note que le moyen de traitement 5 est programmé de manière à pouvoir fournir, par la borne 55, la commande de commutation au moyen 16, en réponse aux signaux électriques V3 et V4 reçus par les bornes respectives 54 et 56.

On va décrire ci-après un mode de réalisation préféré du moyen de commutation 16 du transpondeur 10.

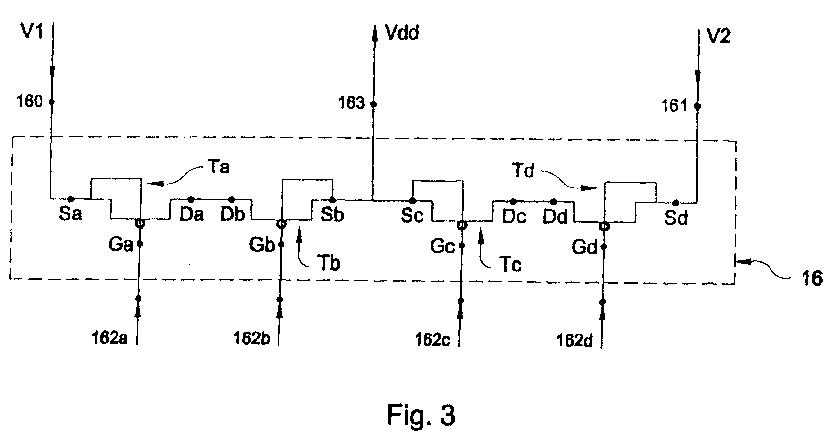

La figure 3 représente un schéma électrique du moyen de commutation 16.

Le moyen de commutation 16 est formé de quatre transistors Ta, Tb, Tc et Td qui, dans l'exemple représenté en figure 3, sont des transistors à effet de champ à canal de type P.

Les références Sa, Da et Ga désignent respectivement la borne de source, la borne de drain et la borne de grille du transistor Ta. On désignera de façon similaire les bornes de source, de drain et de grille des transistors Tb, Tc et Td.

Les transistors Ta à Td sont connectées en série, de la façon suivante. Les bornes Ga à Gd sont connectées respectivement à quatre bornes de commande désignées 162a à 162d, de sorte que chacun de ces transistors peut recevoir, du moyen de traitement 5, ladite commande de commutation, de manière à être conducteur ou bloqué. Les bornes Sa et Sd sont connectées respectivement aux bornes 160 et 161, pour recevoir respectivement les tensions V1 et V2. Les bornes Sb et Sc sont connectées à la borne 163 du moyen de commutation 16, et les bornes Da et Dc sont connectées respectivement aux bornes Db et Dd.

L'homme de l'art note que la chute de tension entre les bornes 163 et 160, et la bornes 163 et 161 est de l'ordre de 200 mV, dans le cas où on forme des transistors Ta à Td à canal de type P dans quatre caissons respectifs de type N faiblement dopé, ces caissons étant formés dans un substrat de silicium de type P faiblement dopé.

De préférence, on réalise l'ensemble des composants du transpondeur 10, en formant une structure intégrée par des étapes de fabrication d'une filière de type CMOS connue en soi. Typiquement, dans leur mode de réalisation préféré respectif susmentionné, on réalise de façon monolithique, dans un unique substrat semi-conducteur, le moyen de traitement 5, le moyen de stockage 12, les moyens de comparaison 14 et 15, ainsi que le moyen de commutation 16. A titre de variante, on peut prévoir de réaliser également de façon monolithique, en plus de ces composants, l'antenne 3.

L'homme de l'art note que l'agencement du moyen de computation du transpondeur 10 est avantageux, puisqu'il empêche la mise en conduction d'un transistor parasite de type bipolaire vertical, quand les transistors à effet de champ de ce moyen sont bloqués. En effet, dans le cas décrit en relation avec la figure 3, ces transistors sont à canal de type P, la borne de drain Da est connectée avec la borne de drain Db, et la borne de drain Dc est connectée avec la borne de drain Dd. On rappellera qu'un transistor parasite de type bipolaire vertical associé à un transistor à effet de champ et à canal de type P devient conducteur seulement si la tension de drain de ce transistor est supérieure à la tension de source de l'ordre de 0,6 V. Or une telle mise en conduction ne peut se produire quand les transistors Ta et Tb, respectivement Tc et Td, sont bloqués, puisque les bornes de drain de ces transistors sont dans un état de haute impédance.

On va maintenant décrire le fonctionnement du transpondeur selon la présente invention, en se référant aux figures 2 et 3 décrites ci-dessus.

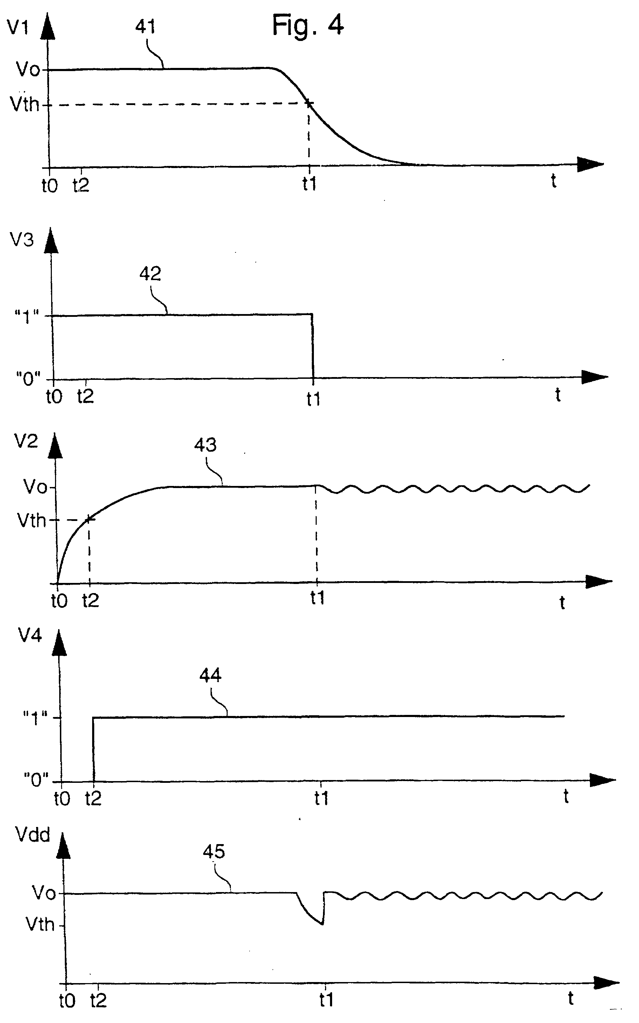

La figure 4 représente cinq chronogrammes 41 à 45 illustrant les évolutions temporelles des tensions V1, V2, V3, V4 et Vdd, respectivement.

Considérons le cas où le moyen d'alimentation 7 fournit une tension V1 qui est à la fois sensiblement égale au niveau d'alimentation V0 désiré, et supérieure au seuil Vth, comme l'illustre le chronogramme 41 entre des instants t0 et t1. Dans ce cas, le moyen de comparaison 14 fournit le signal V3 à un niveau "1" par exemple, entre les instants t0 et t1. Il en résulte que le moyen de traitement 5 commande au moyen de commutation 16 la conduction des transistors Ta et Tb, et le blocage des transistors Tc et Td. Ainsi, entre les instants t0 et t1, la tension Vdd est sensiblement égale à la tension V1.

Le transpondeur 10 ainsi connecté fonctionne donc comme un transpondeur actif tel que décrit ci-dessus. Autrement dit, l'antenne 3 émet des signaux radioélectriques contenant des données destinées à être reçues par une station de base. Ces signaux sont fournis par le moyen de traitement 5 qui reçoit une tension d'alimentation Vdd continue égale à la tension V1, tant que cette dernière est supérieure au seuil Vth.

On note que, entre les instants t0 et t1, le moyen de stockage 12 reçoit de l'énergie de l'antenne 3, via le moyen de traitement 5, de sorte que la tension V2 croît jusqu'à atteindre le seuil Vth à un instant t2. La tension V2 continue ensuite à croître jusqu'au niveau V0.

Considérons maintenant le cas où le moyen d'alimentation 7 fournit la tension V1 à une valeur qui est inférieure au seuil Vth, comme l'illustre le chronogramme 41 à partir de l'instant t1. Dans ce cas, la tension V1 n'est plus suffisante pour assurer l'alimentation électrique du transpondeur 10, nécessaire pour réaliser des fonctions désirées, ce qui se traduit par le fait que, à partir de l'instant t1, la tension V1 est inférieure au seuil Vth. En conséquence, à l'instant t1, la tension V3 devient égale à un niveau "0" et, au même instant, la tension V2 étant supérieure au seuil Vth, la tension V4 devient égale au niveau "1", de sorte que, le moyen de traitement 5 commande au moyen de commutation 16 la blocage des transistors Ta et Tb, et la conduction des transistors Tc et Td. Ainsi, à partir de l'instant t1, la tension Vdd est sensiblement égale à la tension V2.

Le transpondeur 10 ainsi connecté fonctionne donc comme un transpondeur passif tel que décrit ci-dessus. Autrement dit, une station de base émet des signaux radioélectriques contenant des données et de l'énergie électrique. Quand le transpondeur 10 est placé au proche voisinage de la station de base, l'antenne 3 reçoit lesdites données qui sont alors traitées par le moyen de traitement 5, ainsi que de l'énergie électrique qui continue à être stockée dans le moyen de stockage 12, de sorte que la tension V2 est sensiblement égale au niveau V0. En réponse, le moyen de traitement 5 fournit à l'antenne 3 d'autres données qui sont destinées à être reçues par la station de base. Ces signaux sont fournis par le moyen de traitement 5 qui reçoit une tension d'alimentation Vdd égale à la tension V2, cette tension provenant de l'énergie électrique stockée dans le moyen de stockage 12.

L'homme de l'art note que l'agencement du moyen de commutation du transpondeur selon la présente invention, est avantageux, puisqu'il permet à ce transpondeur de déterminer si la valeur de tension fournie par la batterie est suffisante pour assurer son alimentation électrique, notamment pour réaliser les fonctions élémentaires désirées, par exemple la fourniture à distance d'un signal de commande de l'ouverture d'une porte de véhicule.

Il va de soi pour l'homme de l'art que la description détaillée ci-dessus peut subir diverses modifications sans sortir du cadre de la présente invention. A titre de variante, on peut réaliser le moyen de commutation du transpondeur selon la présente invention, en formant des transistors à effet de champ à canal de type N dans quatre caissons respectifs de type P faiblement dopé, ces caissons étant formés dans un substrat de silicium de type N faiblement dopé.

## Revendications

1. Transpondeur actif (10) comprenant :
- une antenne (3) agencée pour pouvoir recevoir et émettre au moins un signal radioélectrique contenant des données;
- un moyen de traitement (5) connecté à l'antenne, et agencé pour pouvoir recevoir et fournir à l'antenne des données d'identification à émettre sous forme de signal radioélectrique;
- un moyen d'alimentation (7) agencé pour pouvoir fournir un premier signal d'alimentation électrique (V1) de l'ensemble des composants du transpondeur;
- un moyen de stockage (12) agencé pour pouvoir stocker de l'énergie électrique et fournir un deuxième signal d'alimentation électrique (V2); et
- un moyen de commutation (16) connecté à des moyens de comparaison du niveau de tension, au moyen de traitement, au moyen de stockage et au moyen d'alimentation, et agencé pour pouvoir connecter le moyen de traitement au moyen de stockage ou au moyen d'alimentation, en fonction de la sortie desdits moyens de comparaison
ce transpondeur étant **caractérisé en ce que** les moyens de comparaison comprennent des premier et deuxième moyens (14, 15) pour comparer respectivement les premier et deuxième signaux d'alimentation à un seuil prédéterminé (Vth) fourni par un moyen de fourniture (18), et **en ce que** le moyen de commutation est agencé de sorte que, quand le premier signal est supérieur au seuil prédéterminé, l'unité de traitement est connectée au moyen d'alimentation pour assurer l'alimentation électrique des composants du transpondeur et, quand le premier signal est inférieur au seuil prédéterminé et que le deuxième signal est supérieur au seuil prédéterminé, l'unité de traitement est connectée au moyen de stockage pour assurer l'alimentation électrique des composants du transpondeur.

2. Transpondeur actif (10) selon la revendication 1, **caractérisé en ce que** le moyen de traitement (5), le moyen de stockage (12), les premier et deuxième moyens de comparaison (14, 15) et le moyen de commutation (16) sont réalisés de façon monolithique dans un unique substrat semi-conducteur.

3. Transpondeur actif (10) selon la revendication 2, **caractérisé en ce que** l'antenne (3) est réalisée de façon monolithique dans ledit substrat.

4. Transpondeur actif (10) selon la revendication 2 ou 3, **caractérisé en ce que** le moyen de commutation (16) est formé dans un substrat de silicium de type P faiblement dopé, dans lequel sont formés des premier, deuxième, troisième et quatrième caissons de type N faiblement dopé, dans chacun desquels est formé respectivement un premier, deuxième, troisième ou quatrième transistor à effet de champ (Ta, Tb, Tc, Td) à canal de type P.

5. Transpondeur actif (10) selon la revendication 4, **caractérisé en ce que** les premier, deuxième, troisième et quatrième transistors (Ta, Tb, Tc, Td) sont connectés en série, **en ce que** les bornes de grille (Ga, Gb, Gc, Gd) des premier, deuxième, troisième et quatrième transistors sont connectées au moyen de traitement (5), **en ce que** les bornes de source (Sa, Sd) des premier et quatrième transistors (Ta, Td) sont connectées respectivement au moyen d'alimentation (7) et au moyen de stockage (12), et **en ce que** les bornes de drain (Db, Dc) des deuxième et troisième transistors (Tb, Tc) sont connectées au moyen de traitement (5) pour servir de borne d'alimentation électrique du moyen de traitement.

6. Transpondeur actif (10) selon la revendication 2 ou 3, **caractérisé en ce que** le moyen de commutation (16) est formé dans un substrat de silicium de type N faiblement dopé, dans lequel sont formés des premier, deuxième, troisième et quatrième caissons de type P faiblement dopé, dans chacun desquels est formé un premier, deuxième, troisième ou quatrième transistor à effet de champ à canal de type N.

7. Transpondeur actif (10) selon la revendication 6, **caractérisé en ce que** les premier, deuxième, troisième et quatrième transistors sont connectées en série, **en ce que** les bornes de grille des premier, deuxième, troisième et quatrième transistors sont connectés au moyen de traitement, **en ce que** les bornes de drain des premier et quatrième transistors sont connectées respectivement au moyen d'alimentation et au moyen de stockage, et **en ce que** les bornes de source des deuxième et troisième transistors sont connectées au moyen de traitement pour servir de borne d'alimentation électrique du moyen de traitement.

8. Dispositif portatif comprenant un transpondeur actif selon l'une quelconque des revendications précédentes.

## Patentansprüche

1. Aktiver Transponder (10), der umfaßt:
- eine Antenne (3), die so beschaffen ist, daß sie wenigstens ein Funksignal, das Daten enthält, empfangen und senden kann;
- ein Verarbeitungsmittel (5), das an die Antenne angeschlossen und so beschaffen ist, daß es Kennungsdaten, die in Form eines Funksignals gesendet werden sollen, empfangen und an die Antenne liefern kann;
- ein Versorgungsmittel (7), das so beschaffen ist, daß es ein erstes elektrisches Versorgungssignal (V1) für die Gesamtheit der Komponenten des Transponders liefern kann;
- ein Speichermittel (12), das so beschaffen ist, daß es elektrische Energie speichern und ein zweites elektrisches Versorgungssignal (V2) liefern kann; und
- ein Umschaltmittel (16), das an Mittel zum Vergleichen des Spannungspegels, an das Verarbeitungsmittel, an das Speichermittel und an das Versorgungsmittel angeschlossen und so beschaffen ist, daß es in Abhängigkeit vom Ausgangssignal der Vergleichsmittel das Verarbeitungsmittel an das Speichermittel oder an das Versorgungsmittel anschließen kann,
wobei dieser Transponder **dadurch gekennzeichnet ist, daß** die Vergleichsmittel erste und zweite Mittel (14, 15) zum Vergleichen der ersten bzw. zweiten Versorgungssignale mit einem vorgegebenen Schwellenwert (Vth), der von einem Lieferungsmittel (18) geliefert wird, umfassen und daß das Umschaltmittel so beschaffen ist, daß die Verarbeitungseinheit dann, wenn das erste Signal größer als der vorgegebene Schwellenwert ist, an das Versorgungsmittel angeschlossen wird, um die elektrische Versorgung der Komponenten des Transponders sicherzustellen, und dann, wenn das erste Signal kleiner als der vorgegebene Schwellenwert ist und das zweite Signal größer als der vorgegebene Schwellenwert ist, an das Speichermittel angeschlossen wird, um die elektrische Versorgung der Komponenten des Transponders zu gewährleisten.

2. Aktiver Transponder (10) nach Anspruch 1, **dadurch gekennzeichnet, daß** das Verarbeitungsmittel (5), das Speichermittel (12), die ersten und zweiten Vergleichsmittel (14, 15) und das Umschaltmittel (16) in einem einzigen Halbleitersubstrat monolithisch verwirklicht sind.

3. Aktiver Transponder (10) nach Anspruch 2, **dadurch gekennzeichnet, daß** die Antenne (3) in diesem Substrat monolithisch verwirklicht ist.

4. Aktiver Transponder (10) nach Anspruch 2 oder 3, **dadurch gekennzeichnet, daß** das Umschaltmittel (16) in einem schwach dotierten P-Silicium-substrat ausgebildet ist, in dem erste, zweite, dritte und vierte schwach dotierte N-Wannen gebildet sind, in denen ein erster, ein zweiter, ein dritter bzw. ein vierter P-Kanal-Feldeffekttransistor (Ta, Tb, Tc, Td) ausgebildet ist.

5. Aktiver Transponder (10) nach Anspruch 4, **dadurch gekennzeichnet, daß** die ersten, zweiten, dritten und vierten Transistoren (Ta, Tb, Tc, Td) in Reihe geschaltet sind, daß die Gate-Anschlüsse (Ga, Gb, Gc, Gd) der ersten, zweiten, dritten und vierten Transistoren an das Verarbeitungsmittel (5) angeschlossen sind, daß die Source-Anschlüsse (Sa, Sd) der ersten und vierten Transistoren (Ta, Td) an das Versorgungsmittel (7) bzw. an das Speichermittel (12) angeschlossen sind und daß die Drain-Anschlüsse (Db, Dc) der zweiten und dritten Transistoren (Tb, Tc) an das Verarbeitungsmittel (5) angeschlossen sind, um als elektrischer Versorgungsanschluß des Verarbeitungsmittels zu dienen.

6. Aktiver Transponder (10) nach Anspruch 2 oder 3, **dadurch gekennzeichnet, daß** das Umschaltmittel (16) in einem schwach dotierten N-Silicium-substrat gebildet ist, in dem erste, zweite, dritte und vierte schwach dotierte P-Wannen gebildet sind, in denen ein erster, ein zweiter, ein dritter bzw. ein vierter N-Kanal-Feldeffekttransistor gebildet ist.

7. Aktiver Transponder (10) nach Anspruch 6, **dadurch gekennzeichnet, daß** die ersten, zweiten, dritten und vierten Transistoren in Reihe geschaltet sind, daß die Gate-Anschlüsse der ersten, zweiten, dritten und vierten Transistoren an das Verarbeitungsmittel angeschlossen sind, daß die Drain-Anschlüsse der ersten und vierten Transistoren an das Versorgungsmittel bzw. an das Speichermittel angeschlossen sind und daß die Source-Anschlüsse der zweiten und dritten Transistoren an das Verarbeitungsmittel angeschlossen sind, um als elektrischer Versorgungsanschluß des Verarbeitungsmittels zu dienen.

8. Tragbare Vorrichtung, die einen aktiven Transponder nach einem der vorhergehenden Ansprüche enthält.

## Claims

1. Active transponder (10) including:
- an antenna (3) arranged to be able to receive and transmit at least one radio-electric signal containing data;
- processing means (5) connected to the antenna, and arranged to be able to receive and supply to the antenna identification data to be transmitted in the form of radio-electric signals;
- power supply means (7) arranged to be able to supply a first electric supply signal (V1) for all the transponder components;
- storage means (12) arranged to be able to store electric power and to provide a second electric power signal (V2); and
- switching means (16) connected to voltage level comparison means, to the processing means, to the storage means, and to the power supply means, and arranged to be able to connect the processing means to the storage means or to the power supply means, as a function of the output of said comparison means,
said transponder being **characterized in that** the comparison means include first and second means (14, 15) for comparing respectively the first and second power supply signals to a predetermined threshold (Vth) provided by supply means (18), and **in that** the switching means are arranged so that, when the first signal is greater than the predetermined threshold, the processing unit is connected to the power supply means to assure the electric power supply for the transponder components and, when the first signal is less than the predetermined threshold and the second signal is greater than the predetermined threshold, the processing unit is connected to the storage means to assure the electric power supply for the transponder components.

2. Active transponder (10) according to claim 1, **characterized in that** the processing means (5), the storage means (12), the first and second comparison means (14, 15) and the switching means (16) are made in a monolithic manner in a single semiconductor substrate.

3. Active transponder (10) according to claim 2, **characterized in that** the antenna (3) is made in a monolithic manner in said substrate.

4. Active transponder (10) according to claim 2 or 3, **characterized in that** the switching means (16) are formed in a slightly doped P type silicon substrate, in which are formed first, second, third and fourth lightly doped N type wells, in each of which is formed respectively a first, second, third or fourth P type channel field effect transistor (Ta, Tb, Tc, Td).

5. Active transponder (10) according to claim 4, **characterized in that** the first, second, third and fourth transistors (Ta, Tb, Tc, Td) are connected in series, **in that** the gate terminals (Ga, Gb, Gc, Gd) of the first, second, third and fourth transistors are connected to the processing means (5), **in that** the source terminals (Sa, Sd) of the first and fourth transistors (Ta, Td) are connected respectively to the power supply means (7) and to the storage means (12), and **in that** the drain terminals (Db, Dc) of the second and third transistors (Tb, Tc) are connected to the processing means (5) to act as electric power supply terminals for the processing means (5).

6. Active transponder (10) according to claim 2, **characterized in that** the switching means (16) are formed in a lightly doped N type silicon substrate, in which are formed first, second, third and fourth slightly doped P type wells, in each of which is formed a first, second, third or fourth N type channel field effect transistor.

7. Active transponder (10) according to claim 6, **characterized in that** the first, second, third and fourth transistors are connected in series, **in that** the gate terminals of the first, second, third and fourth transistors are connected to the processing means, **in that** the drain terminals of the first and fourth transistors are respectively connected to the power supply means and to the storage means, and **in that** the source terminals of the second and third transistors are connected to the processing means to act as electric power supply terminals for the processing means.

8. Portable device including an active transponder according to any one of the preceding claims.
